**Europäisches Patentamt**

**European Patent Office**

**Office européen des brevets**

(19)

(11) Veröffentlichungsnummer : **0 284 617 B1**

(12) # EUROPÄISCHE PATENTSCHRIFT

(45) Veröffentlichungstag der Patentschrift :
**22.04.92 Patentblatt 92/17**

(51) Int. Cl.⁵ : **A23L 2/04,** A23N 1/02

(21) Anmeldenummer : **87906058.0**

(22) Anmeldetag : **28.09.87**

(86) Internationale Anmeldenummer :
**PCT/CH87/00124**

(87) Internationale Veröffentlichungsnummer :
**WO 88/02223 07.04.88 Gazette 88/08**

(54) **VERFAHREN ZUR BEHANDLUNG VON FRÜCHTEN UND GEMÜSEN, INSBESONDERE ZUR SAFTGEWINNUNG.**

Die Akte enthält technische Angaben, die nach dem Eingang der Anmeldung eingereicht wurden und die nicht in dieser Patentschrift enthalten sind.

(30) Priorität : **29.09.86 CH 3893/86**

(43) Veröffentlichungstag der Anmeldung :
**05.10.88 Patentblatt 88/40**

(45) Bekanntmachung des Hinweises auf die Patenterteilung :
**22.04.92 Patentblatt 92/17**

(84) Benannte Vertragsstaaten :
**AT DE FR IT**

(56) Entgegenhaltungen :
**WO-A-86/04059**
**FR-A- 2 166 489**
**GB-A- 2 139 471**
**GB-A- 2 163 062**
**US-A- 3 737 324**
**Food technology, volume 39, No 12, December 1984, (Chicago, Illinois, US) D. J. Paulson et al.:"Crossflow membrane technology and its applications", page 77-87**
**"Frucht- und Gemüsesäfte", Schobinger Seite 129**

(73) Patentinhaber : **BUCHER-GUYER AG Maschinenfabrik**
**CH-8166 Niederweningen/Zürich (CH)**

(72) Erfinder : **GRESCH, Walter**
**Boletstrasse 390**
**CH-8166 Niederweningen (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Behandlung von Früchten und Gemüsen, insbesondere zur Saftgewinnung, mit Einrichtungen zur wenigstens teilweisen Verflüssigung und anschliessender Filtration des Rohmaterials.

Durch die japanische Patentschrift Nr. 59-35580 ist es bekannt, die in einem Behälter befindliche Maische durch enzymatischen Zellaufschluss zu behandeln. Die zerkleinerten Früchte werden zusammen mit den hinzugefügten Enzymen, z.B. Cellulase, Pektinase, mit Hilfe eines Rührwerks vermischt und durch den enzymatischen Zellaufschluss verflüssigt. Das dadurch erhaltene Flüssigkeitsgemisch durchläuft eine Passier-Maschine und wird an eine Sterilisiereinrichtung zur Deaktivierung der Enzyme weitergeleitet. Danach wird der Rohsaft einer Ultrafiltrationseinrichtung zugeführt und geklärt.

Der Verbrauch von Enzymen für die Verflüssigung durch enzymatischen Zellaufschluss ist bei diesem bekannten Verfahren relativ hoch, weil das Volumen des zu behandelnden Flüssigkeitsgemisches am Anfang des Prozesses sehr gross ist. Dies bedeutet hohe Betriebskosten für die Durchführung des Verfahrens. Ausserdem sind noch qualitative Verbesserungen wünschenswert.

Daneben besteht auch die Möglichkeit, die Verflüssigung des Rohmaterials durch physikalischen Zellaufschluss vorzunehmen. Die hierzu erforderlichen Apparaturen müssen aber infolge des grossen Verarbeitungsvolumens entsprechend gross dimensioniert werden, was ebenfalls zu relativ hohen Investitionskosten führt.

Bei einem bekannten Verfahren nach der GB-A-2'163'062 werden zur Gewinnung von Flüssigkeit unter Ausscheidung von Trubstoffen, Makromolekülen und kolloidal gelösten Teilen aus Rückständen, die bei der Schönung bzw. Klärung von bei der Entsaftung durch Pressen landwirtschaftlicher Produkte gewonnenen Säfte als filtrierte Restsubstanz anfallen, die Rückstände einem wenigstens teilweise ausgepressten Trester zur separaten Aufbereitung.bzw. zur Weiterverarbeitung beigemischt.

Mit diesem Verfahren wird vorerst durch Auspressen landwirtschaftlicher Produkte ein Rohsaft erzeugt, der anschliessend filtriert wird; und dem nach dem Auspressen zurückbleibenden Trester werden die Rückstände aus der Filtration des Rohsaftes beigemischt, sodass sie einer weiteren Entsaftung unterziehbar sind. Dieses Verfahren verlangt den Einsatz einer Presse, die relativ hohe Investitions- und Unterhaltskosten verursacht und einen erheblichen Aufwand an Zeit bei der Durchführung des Verfahrens beansprucht.

Durch US-A-3737324 (V.I.Zinchenko et al.) ist ein Verfahren zur Behandlung von Frucht-Pulpe bekannt, welches bei der Herstellung von Weinen, Cognacs und nicht-alkoholischen Getränken verwendet wird. Dabei gewinnt man diese Pulpe durch Zerkleinern von Früchten, wobei sich die Pulpe bildet. Das Verfahren umfasst die Schritte Hinzufügen eines geklärten cryolytischen Enzympräparates einer Kultur des Pilzes Trichothecium roseum mit einer cryolytischen Aktivität von mindestens 2'500 Einheiten zur Pulpe unmittelbar nach dem Zerkleinern der Früchte, Stehenlassen der Pulpe und Abtrennung von Most von der Pulpe.

Bei einer Variante dieses bekannten Verfahrens trennt man nach der Pulpe-Gewinnung frei-laufenden Most von der Pulpe, dann presst man die Pulpe, und trennt den Most des ersten Pressvorgangs ab, wobei eine Rest-Pulpe entsteht. Als weitere Schritte umfasst diese Variante Hinzufügen eines geklärten cryolytischen Enzympräparates einer Kultur des Pilzes Trichothecium roseum mit einer cryolytischen Aktivität von mindestens 2'500 Einheiten zur Rest-Pulpe, Stehenlassen der Rest-Pulpe und Abtrennung von Most von der Rest-Pulpe durch weiteres Pressen.

Bei diesem Verfahren wird also das Enzympräparat dem gesamten Fruchtgut beigemischt, wobei eine relativ grosse Menge Enzympräparat erforderlich ist, wenn man eine bestimmte Minimalkonzentration benötigt. Bei der genannten Verfahrensvariante wird zwar das Enzympräparat einer Rest-Pulpe erst nach Abtrennung einer gewissen Menge Most beigemischt, die Enzyme wirken aber in jedem Fall auch auf die in der Pulpe enthaltenen Feststoffe, wie Stiele, Kerne, Schalenteile ein, wobei sich leicht ein bitterer Fehlgeschmack ergibt. Ausserdem ist bei der genannten Verfahrensvariante bei der Enzymatisierung eine Beimischung von Wasser erforderlich, weil die Rest-Pulpe infolge der ersten Pressung flüssigkeitsarm ist und sonst nicht vollständig mit dem Enzym in Kontakt gebracht werden kann. Solches Wasser hat aber eine nachteilige Verdünnungsfunktion.

Der Erfindung liegt deshalb die Aufgabe zugrunde, ein Verfahren und eine dazugehörige Anlage zu schaffen, das die genannten Nachteile vermeidet und zur Kostensenkung und Qualitäts-verbesserung bei der Saftgewinnung beiträgt.

Gemäss der Erfindung wird diese Aufgabe nach dem Kennzeichen des Patentanspruches 1 gelöst.

Zweckmässigerweise erfolgt die Klärung des Rohmaterials durch Membranfiltration, wobei zur Bildung des Rohmaterials ganze Früchte zerkleinert werden.

Die Anlage zur Durchführung des Verfahrens ist dadurch gekennzeichnet, dass sie aus einer Einrichtung zum Zerkleinern oder Blanchieren der Früchte, einer sich anschliessenden Passier-Maschine und einer Membranfiltrationseinrichtung besteht, der eine Einrichtung für den chemischen, insbesondere enzymatischen oder physikalischen Zellaufschluss des Retentates nachgeschaltet ist.

Falls eine zusätzliche Vorverflüssigung erforderlich ist, kann eine weitere Einrichtung für den enzymatischen oder physikalischen Zellaufschluss als erste Verflüssigungsstufe der Membranfiltrationseinrichtung vorgeschaltet oder in diese integriert werden. Durch diese Massnahme soll erreicht werden, dass vor der Membranfiltration nur so weit enzymatisch oder physikalisch verflüssigt wird, dass ein beträchtlicher Anteil der verflüssigten Maische über die Membranfiltrationseinrichtung gefahren werden kann.

Nach einem weiteren Merkmal der Erfindung besteht die Membranfiltrationseinrichtung aus einer Ultra- oder Mikrofiltrationseinrichtung.

Zur Verbesserung der Filtrationsleistung ist die Membranfiltrationseinrichtung wenigstens zweistufig ausgeführt, wobei die erste Stufe der Vorklärung des Rohsaftes dient und die zweite oder weitere Stufen durch die Ultra- oder Mikrofiltrationsanlage gebildet werden. Durch diese Massnahme kann in manchen Fällen der enzymatische oder physikalische Zellaufschluss in der ersten Verflüssigungsstufe vor der Membranfiltrationseinrichtung entfallen. Die Folge davon ist eine weitere Enzymeinsparung und Kostensenkung sowie eine Qualitäts-verbesserung, da die Enzymeinwirkung nur während der zweiten Verflüssigungsstufe nach der Membranfiltrationseinrichtung und somit während einer kürzeren Verweilzeit erfolgt.

Zweckmässigerweise besteht die erste Stufe der Membranfiltrationseinrichtung aus einer tangential angeströmten Grob- oder Mikrofiltration oder einer dynamischen Querstromfiltrationseinrichtung.

Zur Verbesserung der Wirkung in der ersten Stufe, kann diese gegenüber den nachfolgenden Stufen mit höherem Druck betrieben werden, wozu auf einfache Art und Weise keramische oder metallische Filtrationsmaterialien eingesetzt werden können.

Zur rationelleren Verwertung des Rohmaterials und zur Verbesserung der Ausbeute ist der Passier-Maschine eine Recycling-Presse zugeordnet, durch die die abgetrennten Stiele, Kerne und Schalenteile etc. entsaftet werden.

Um die Ausbeute der Anlage zu erhöhen und zur Entsorgung des von der Einrichtung für den enzymatischen oder physikalischen Zellaufschluss.behandelten Retentates kann letzteres ebenfalls der Recycling-Presse zugeführt werden. Die Anordnung der Recycling-Presse erlaubt es, bei hoher Gesamtausbeute, die Membranfiltrationseinrichtung bei nur mässiger Ausbeute zu fahren, was zu grossen Kosteneinsparungen führt. Die Möglichkeit des Fahrens der Membranfiltrationseinrichtung mit niedriger Ausbeute bedeutet, dass in gewissen Fällen auf die erste Verflüssigungsstufe vor der Membranfiltration verzichtet oder diese zumindest stark reduziert werden kann.

Zur Vermeidung der Nachtrübung des Saftes, insbesondere durch kolloidal gelöste Teile, Makromoleküle, z.B. Polyphenole, und zur Verbesserung der Filtrationsfähigkeit des Retentates ist der Einrichtung für den enzymatischen oder physikalischen Zellaufschluss eine Behandlungsstufe zugeordnet, in der das Retentat mit bekannten Schönungsmitteln und im allgemeinen geringen Mengen von Enzymen behandelt wird, bevor es der Recycling-Presse zugeführt wird.

Zwecks einfacher Weiterverarbeitung wird der durch die Recycling-Presse gewonnene Rohsaft über eine Zuführleitung unmittelbar nach der Passiermaschine wieder in den Prozessablauf zurückgeführt.

Zur Reduktion der Viskosität des zerkleinerten Rohmaterials und damit zur Verbesserung der Filtrierleistung und daneben je nach Aufschluss-Verfahren auch zur Beschleunigung des physikalischen Zellaufschlusses, sofern eine Verflüssigung vor der Membranfiltration erfolgt, kann zwischen der Passier-Maschine und der ersten Verflüssigungsstufe eine Behandlungsstufe mit in der Praxis zugelassenen pektolytischen Enzymen vorgesehen werden. Die Enzymbehandlung ist auch nach der ersten Verflüssigungsstufe möglich, wenn nur eine Verbesserung der Filtrierleistung beabsichtigt ist. In schwierigen Fällen ist hier zusätzlich zum physikalischen Zellaufschluss auch ein den physikalischen Aufschluss unterstützender enzymatischer Zellaufschluss durch Zugabe von z.B. Cellulase-Enzymen möglich.

Die mit der Erfindung erzielten Vorteile sind vor allem darin zu sehen, dass die enzymatische oder physikalische Behandlung der Durchsatzmenge ganz oder hauptsächlich in einem Verfahrensabschnitt der Anlage erfolgt, in dem das Volumen der Durchsatzmenge bereits erheblich verringert ist. Da Enzyme lediglich als biochemische Katalysatoren wirken und deshalb nicht in die Reaktionsprodukte eingehen, ist für die Wirksamkeit vorwiegend die Enzymkonzentration massgebend. Bei ähnlicher Konzentration wie bei bekannten Prozessen wird deshalb aufgrund des geringeren Volumens beim Verfahren gemäs der Erfindung eine beträchtliche Enzymeinsparung erzielt. Erfolgt die Behandlung nicht enzymatisch, sondern physikalisch, so könen auch hier aufgrund des geringeren Volumens die Apparaturen für den physikalischen Zellaufschluss kleiner dimensioniert und somit die Investitionskosten gesenkt werden. Ausserdem wird durch das erfindungsgemässe Verfahren auch eine Verbesserung der Saftqualität erzielt, weil die Verweilzeit während der enzymatischen Vorbehandlung kürzer ist, respektive ein beträchtlicher Saftanteil in der Filtrationsanlage ohne oder nur mit schwacher Enzymeinwirkung gewonnen wird.

Die Erfindung ist anhand der folgnden Beschreibung und der schematischen Zeichnung, die ein Ausführungsbeispiel der Anlage zur Durchführung des Verfahrens in vereinfachter Blockdarstellung zeigt, näher erläutert.

Das aus zerkleinerten ganzen Früchten bestehende Rohmaterial wird gemäss Ausführungsbeispiel in einer Mühle 1 und einer Passier-Maschine 2 pulpeähnlich aufbereitet. Anstelle der Mühle 1 können die ganzen Früchte auch in einer Blanchier-Maschine angekocht werden, bevor sie in der Passier-Maschine 2 zerkleinert werden.

Von der Passier-Maschine 2 gelangt das Rohmaterial in eine erste Verflüssigungsstufe 3, in der es durch enzymatischen oder physikalischen Zellaufschluss vorbehandelt wird. Anschliessend wird das Flüssigkeitsgemisch in eine Membranfiltrationseinrichtung 4 geleitet. In der ersten Verflüssigungsstufe 3 wird das Rohmaterial nur insoweit enzymatisch oder physikalisch verflüssigt, dass ein beträchtlicher Anteil der verflüssigten Maische über die Membranfilträtionseinrichtung 4 gefahren werden kann. Die Ausbeute auf der Membranfiltrationseinrichtung 4 liegt vorzugsweise bei über ca. 65 %. Das von der Membranfiltrationseinrichtung 4 anfallende Retentat wird einer Einrichtung 5 für den enzymatischen oder physikalischen Zellaufschluss zugeführt. In der Einrichtung 5, welche die zweite Verflüssigungsstufe bildet, erfolgt der Hauptaufschluss der Zellen zur weiteren Verflüssigung des Retentates.

Zwischen der Passier-Maschine 2 und der ersten Verflüssigungsstufe 3 ist eine Behandlungsstufe 6 vorgesehen, in der dem Rohmaterial Enzyme, wie z.B. Pektinase sowie bekannte Schönungsmittel zugeführt werden.

Der Passier-Maschine 2 ist eine Recycling-Presse 7 zugeordnet, in der die von der Passier-Maschine 2 anfallenden Stiele, Kerne und Schalenteile entsaftet werden. Als Recycling-Presse eignet sich am besten eine Horizontal-Presse wegen der guten Filtrierwirkung durch die langen Fliesswege für den Saft. Der durch die Recycling-Presse 7 gewonnene Rohsaft wird über eine Leitung 8 vorzugsweise unmittelbar nach der Passier-Maschine 2 wieder in den Prozessablauf eingeführt.

Bevor das Retentat von der Einrichtung 5 für den enzymatischen oder physikalischen Zellaufschluss in die Recycling-Presse 7 gelangt, wird es in einer Behandlungsstufe 5 mit Enzymen und Schönungsmitteln 9 behandelt.

Die Membranfiltrationseinrichtung 4 ist zweistufig ausgeführt. Die erste Stufe 10, in der die Vorklärung des Rohsaftes erfolgt, wird durch eine tangential angeströmte Grob- oder Mikrofiltrationseinrichtung gebildet, welche bei höheren Drücken, z.B. über 20 bar arbeitet. Das Permeat der ersten Stufe wird der zweiten Stufe (10 bar) zugeführt, welche aus einer normalen Ultra- oder Mikrofiltrationseinrichtung 11 besteht. Anstelle der Grob- oder Mikrofiltrationseinrichtung kann in der ersten Stufe 10 der Membranfiltrationseinrichtung 4 auch eine dynamische Querstromfiltrationseinrichtung mit Vorteil eingesetzt werden. Es handelt sich dabei um eine handelsübliche Druckfiltrationseinrichtung, welche dynamisch durch z.B. Erzeugung einer sogenannten Taylor-Wirbelströmung, hervorgerufen durch eine innere rotierende Membrantrommel, arbeitet. Durch den Einsatz derartiger Hochdruck-Einrichtungen in der ersten Stufe 10 der Membranfiltrationseinrichtung 4 kann in manchen Fällen die Verflüssigungsstufe 3 vor der Membranfiltrationseinrichtung 4 ganz entfallen.

Anstelle der Zurückführung des Saftes aus der Recycling-Presse 7 in den Prozess kann der Recycling-Saft auch separat verwertet werden. Dadurch ergeben sich zwei Saftarten mit unterschiedlicher Qualität. Der Saft mit einer vergleichbar hohen Qualität wird unmittelbar der Ultra- oder Mikrofiltrationseinrichtung 11 entnommen und entspricht der konventionellen Saftherstellung, wenn ohne die Verflüssigungsstufe 3 gearbeitet wird. Der Saft mit verminderter Qualität wird der Recycling-Presse 7 entnommen und lässt sich z.B. für den Verschnitt von Säften verwenden.

Die zweistufige Membranfiltrationseinrichtung 4 lässt auch eine Alternative zu, bei der die Maische ab der Mühle 1 direkt der ersten Stufe 10 der Membranfiltrationseinrichtung 4, d.h. vorzugsweise einer dynamischen Querstromfiltrationseinrichtung zugeführt wird. In diesem Fall ist die Passier-Maschine 2 entbehrlich. Eine Verbesserung hierbei wird noch durch die Zugabe von pektolytischen Enzymen zusammen mit der Einspeisung von Früchten vor der Zerkleinerung erzielt. Eine weitere Verbesserung wird dadurch erreicht, dass die Stiele, Kerne und Schalen im Retentat der ersten Stufe der Membranfiltrationseinrichtung mittels einer Siebtrommel, eines Schüttelsiebes oder dgl. abgetrennt werden und mittels einer Recycling-Presse (Saftrückgewinnung) ausgepresst werden. Die Recycling-Presse lässt sich somit ebenfalls zur Filtration des Retentates ab Schüttelsieb einsetzen, bevor es z.B. wieder in den Prozess zurückgeführt wird.

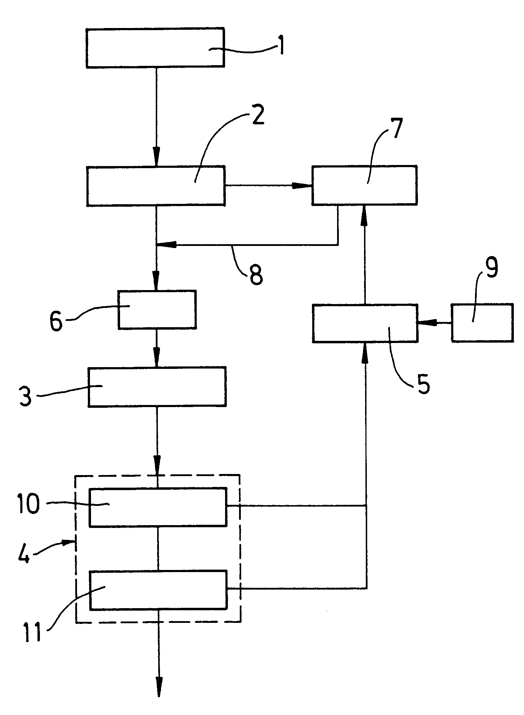

## Patentansprüche

1. Verfahren zur Behandlung von Früchten und Gemüsen, insbesondere zur Saftgewinnung, mit Einrichtungen zur wenigstens teilweisen Verflüssigung und anschliessender Filtration des Rohmaterials, dadurch gekennzeichnet, dass das Retentat des vor der Filtration von Festteilen befreiten und als Pulpe aufbereiteten Rohmaterials durch chemischen, insbesondere enzymatischen, oder physikalischen Zellaufschluss verflüssigt und mit den Festteilen zur weiteren Entsaftung aufbereitet wird.

2. Verfahren nach Anspruch 1, dadurch gekennzeichnet, dass die Klärung des Rohmaterials durch Membranfiltration erfolgt.

3. Anlage zur Durchführung des Verfahrens nach einem der Ansprüche 1 bis 2, dadurch gekennzeichnet, dass sie aus einer Einrichtung (1) zum Zerkleinern oder Blanchieren der Früchte, einer sich anschliessenden Passier-Maschine (2) und einer Membranfiltrationseinrichtung (4) besteht, der eine Einrichtung (5) für den chemischen, insbesondere enzymatischen oder physikalischen Zellaufschluss des Retentates nachgeschaltet ist.

4. Anlage nach Anspruch 3, dadurch gekennzeichnet, dass eine weitere Einrichtung für den chemischen oder physikalischen Zellaufschluss als erste Verflüssigungsstufe (3) der Membranfiltrationseinrichtung (4) vorgeschaltet oder in diese integriert ist.

5. Anlage nach Anspruch 3 oder 4, dadurch gekennzeichnet, dass zwischen der Passier-Maschine (2) und der ersten Verflüssigungsstufe (3) eine Behandlungsstufe (6) mit pektolytischen Enzymen vorgesehen ist.

6. Anlage nach einem der Ansprüche 3 bis 5, dadurch gekennzeichnet, dass die Membranfiltrationseinrichtung (4) aus einer Ultra- oder Mikrofiltrationseinrichtung (11) besteht.

7. Analge nach einem der Ansprüche 3 bis 6, dadurch gekennzeichnet, dass die Membranfiltrationseinrichtung (4) wenigstens zweistufig ausgeführt ist.

8. Anlage nach Anspruch 7, dadurch gekennzeichnet, dass die erste Stufe (10) der Membranfiltrationseinrichtung (4) zur Vorklärung des Rohmaterials dient und die zweite oder weitere Stufen durch die Ultra- oder Mikrofiltrationseinrichtung (11) gebildet werden.

9. Anlage nach einem der Ansprüche 3 bis 8, dadurch gekennzeichnet, dass die erste Stufe (10) eine gegenüber den folgenden Stufen höheren Betriebsdruck, bspw. über 20 bar aufweist.

10. Anlage nach Anspruch 7 oder 9, dadurch gekennzeichnet, dass die erste Stufe (10) der Membranfiltrationseinrichtung (4) aus einer tangential angeströmten Grob- oder Mikrofiltrationseinrichtung oder einer dynamischen Querstromfiltrationseinrichtung besteht.

11. Anlage nach einem der Ansprüche 3 bis 10, dadurch gekennzeichnet, dass der Passier-Maschine eine Recycling-Presse (7) zugeordnet ist, durch die die abgetrennten Stiele, Kerne und Schalenteile etc. entsaftet werden.

12. Anlage nach einem der Ansprüche 3 bis 11, dadurch gekennzeichnet, dass das von der Einrichtung (5) für den enzymatischen oder physikalischen Zellaufschluss behandelte Retentat der Recycling-Presse (7) zugeführt wird.

13. Anlage nach einem der Ansprüche 3 bis 12, dadurch gekennzeichnet, dass der Einrichtung (5) für den enzymatischen oder physikalischen Zellaufschluss eine Behandlungsstufe (9) zugeordnet ist, in der das Retentat mit Schönungsmitteln und Enzymen behandelt wird, bevor es der Recycling-Presse (7) zugeführt wird.

14. Anlage nach einem der Ansprüche 3 bis 13, dadurch gekennzeichnet, dass der durch die Recycling-Presse (7) gewonnene Rohsaft über eine Zuführleitung (8) unmittelbar nach der Passier-Maschine (2) wieder in den Prozessablauf zurückgeführt wird.

## Claims

1. Method for processing fruit and vegetables, especially in order to obtain juices, with devices for at least partial liquefaction and subsequent filtration of the raw material, characterised in that the residue of the raw material freed of solid constituents prior to filtration and worked into a pulp is liquefied by chemical, especially enzymatic or physical cell disintegration and is treated with the solid constituents for further juice extraction.

2. Method according to claim 1, characterised in that the clarification of the raw material is effected by membrane filtration.

3. Installation for carrying out the method according to one of claims 1 and 2, characterised in that it consists of a device (1) for comminuting or blanching the fruit, a pulping machine (2) connected thereto and a membrane filtration device (4), followed by a device (5) for the chemical, especially enzymatic or physical cell disintegration of the residue.

4. Installation according to claim 3, characterised in that a further device for the chemical or physical cell disintegration precedes the membrane filtration device (4) or is integrated therewith as a first liquefying stage (3).

5. Installation according to claim 3 or claim 4, characterised in that a stage (6) for treatment with pectolytic enzyme is provided between the pulping machine (2) and the first liquefying stage (3).

6. Installation according to one of claims 3 to 5, characterised in that the membrane filtration device (4) consists of an ultra- or microfiltration device (11).

7. Installation according to one of claims 3 to 6, characterised in that the membrane filtration device (4) is designed to have at least two stages.

8. Installation according to claim 7, characterised in that the first stage (10) of the membrane filtration device (4) serves for the preclarification of the raw material and the second or further stages are formed by the ultra- or microfiltration device (11).

9. Installation according to one of claims 3 to 8, characterised in that the first stage (10) has a higher operating pressure, e.g. in excess of 20 bar, than the subsequent stages.

10. Installation according to claim 7 or claim 9, characterised in that the first stage (10) of the membrane filtration device (4) consists of a tangentially traversed coarse or microfiltration device or a dynamic crossflow filtration device.

11. Installation according to one of claims 3 to 10, characterised in that a recycling press (7) is associated with the pulping machine, by means of which the juice is extracted from the separated stalks, pips and skin fragments, etc..

12. Installation according to one of claims 3 to 11, characterised in that the residue treated by the device (5) for the enzymatic or physical cell disintegration is advanced to the recycling press (7).

13. Installation according to one of claims 3 to 12, characterised in that a treatment stage (9) is associated with the device (5) for the enzymatic or physical cell disintegration, in which the residue is treated with fining agents and enzymes before it is advanced to the recycling press (7).

14. Installation according to one of claims 3 to 13, characterised in that the raw juice obtained by the recycling press (7) is returned to the processing cycle via a supply line (8) directly following the pulping machine (2).

**Revendications**

1. Procédé pour le traitement de fruits et de légumes, en particulier pour l'extraction du jus, au moyen de dispositifs destinés à rendre liquide le produit brut, du moins partiellement, et à le filtrer ensuite, caractérisé par le fait que la fraction retenue du produit brut qui est débarrassé des parties solides et qui est préparé sous la forme d'une pulpe avant la filtration est rendue liquide par digestion des cellules par voie chimique, et en particulier enzymatique, ou par voie physique, et qu'elle est préparée avec les parties solides en vue de la suite de l'extraction du jus.

2. Procédé selon la revendication 1, caractérisé par le fait que la clarification du produit brut a lieu par filtration sur membrane.

3. Installation pour la mise en oeuvre du procédé selon l'une des revendications 1 et 2, caractérisée par le fait qu'elle se compose d'un dispositif (1) pour fractionner ou blanchir les fruits, d'un pressoir (2) qui s'y raccorde et d'un dispositif de filtration sur membrane (4) en aval duquel est monté un dispositif (5) pour la digestion par voie chimique, et en particulier enzymatique, ou par voie physique des cellules de la fraction retenue.

4. Installation selon la revendication 3, caractérisée par le fait qu'un autre dispositif pour la digestion chimique ou physique des cellules est monté en amont du dispositif de filtration sur membrane (4) pour servir de premier étage de fluidification (3), ou qu'il est intégré à ce dispositif.

5. Installation selon la revendication 3 ou 4, caractérisée par le fait qu'un étage (6) de traitement par des enzymes pectolytiques est prévu entre le pressoir (2) et le premier étage de fluidification (3).

6. Installation selon l'une des revendications 3 à 5, caractérisée par le fait que le dispositif de filtration sur membrane (4) est constitué par un dispositif (11) d'ultrafiltration ou de microfiltration.

7. Installation selon l'une des revendications 3 à 6, caractérisée par le fait que le dispositif de filtration sur membrane (4) comprend au moins deux étages.

8. Installation selon la revendication 7, caractérisée par le fait que le premier étage (10) du dispositif de filtration sur membrane (4) sert à la préclarification du produit brut, et que le deuxième étage ou les autres étages sont constitués par le dispositif (11) d'ultrafiltration ou de microfiltration.

9. Installation selon l'une des revendications 3 à 8, caractérisée par le fait que le premier étage (10) présente par rapport aux étages suivants une pression de fonctionnement plus élevée, par exemple supérieure à 20 bars.

10. Installation selon la revendication 7 ou 9, caractérisée par le fait que le premier étage (10) du dispositif de filtration sur membrane (4) est constitué par un dispositif de filtration grossière ou de microfiltration à afflux tangentiel ou par un dispositif de filtration dynamique à courant transversal.

11. Installation selon l'une des revendications 3 à 10, caractérisée par le fait qu-est associée au pressoir une presse de recyclage (7) grâce à laquelle du jus est extrait des queues, des noyaux, des parties d'écorce etc. qui sont séparés.

12. Installation selon l'une des revendications 3 à 11, caractérisée par le fait que la fraction retenue traitée par le dispositif (5) pour la digestion enzymatique ou physique des cellules est amenée à la presse de recyclage (7).

13. Installation selon l'une des revendications 3 à 12, caractérisée par le fait qu'au dispositif (5) pour la digestion enzymatique ou physique des cellules est associé un étage de traitement (9) dans lequel la fraction retenue est traitée par des agents de clarification et des enzymes avant d'être amenée à la presse de recyclage (7).

14. Installation selon l'une des revendications 3 à 13, caractérisée par le fait que le jus brut obtenu grâce à la presse de recyclage (7) est ramené dans le déroulement du processus par une conduite d'amenée (8), et ce, immédiatement après le pressoir (2).